# EUROPEAN PATENT APPLICATION

(11) **EP 3 012 055 A1**
(43) Date of publication of application: **27.04.2016**
(21) Application number: 15187048.2
(22) Date of filing: 28.09.2015
(51) Int. Cl.: B23F 19/04

(54) **LAPPING MACHINE AND LAPPING METHOD**

(30) Priority: 29.09.2014 JP 2014199414
(71) Applicant: TOYOTA JIDOSHA KABUSHIKI KAISHA, Toyota-shi, Aichi 471-8571 (JP)
(72) Inventor: IMAIZUMI, Tomomi, Toyota-shi, Aichi 471-8571 (JP)
(74) Representative: TBK

(57) **Abstract**

A lapping machine (100) includes a lap (10) that is meshed with a workpiece gear (110) and laps the workpiece gear (110). The lap (10) is meshed with the workpiece gear (110) such that: there is a clearance in a prescribed amount between a tooth tip of the lap (10) and a bottom land of the workpiece gear (110), and there is a clearance in the prescribed amount between a bottom land of the lap (10) and a tooth tip of the workpiece gear (110); and an effective tooth tip (D2) of the lap (10) is located closer to the bottom land of the workpiece gear (110) than a curved line indicating a tooth profile management diameter (d3) of the workpiece gear (110) is.

## Description

### BACKGROUND OF THE INVENTION

### 1. Field of the Invention

The invention relates to a gear lapping technique.

### 2. Description of Related Art

Lapping is a process in which a lap and a workpiece are rubbed against each other with an abrasive held therebetween so that the workpiece undergoes micro cutting to be ground. In this way, lapping gives a smoother finish to the workpiece. In gear lapping, a workpiece gear is lapped with a lap that is in mesh with the workpiece gear (see, for example, Japanese Patent Application Publication No. 02-057755 (JP 02-057755 A)).

### SUMMARY OF THE INVENTION

In gear lapping, a tooth tip of a lap is meshed with a portion (dedendum) of a tooth flank of a workpiece gear. Thus, the portion of the tooth flank, with which the lap is meshed, may be cut more deeply than the rest of the tooth flank and a recess may be formed at the portion. This leads to a lower dimensional accuracy of the workpiece gear obtained by lapping, resulting in lower meshing performance of the lapped workpiece gear. Due to such low meshing performance, the gear (lapped workpiece gear) incorporated into a product is likely to generate vibrations and noise. In view of this, a technique for preventing the formation of a recess at a dedendum flank of a workpiece gear has been demanded.

The invention provides a lapping machine and a lapping method that make it possible to lap a workpiece gear with high accuracy without causing formation of a recess at a dedendum of the workpiece gear.

A first aspect of the invention relates to a lapping machine including a lap that is meshed with a workpiece gear and laps the workpiece gear. The lap is meshed with the workpiece gear such that: there is a clearance in a prescribed amount between a tooth tip of the lap and a bottom land of the workpiece gear, and there is a clearance in the prescribed amount between a bottom land of the lap and a tooth tip of the workpiece gear; and an effective tooth tip of the lap is located closer to the bottom land of the workpiece gear than a curved line indicating a tooth profile management diameter of the workpiece gear is.

A second aspect of the invention relates to a lapping method of lapping a workpiece gear with a lap that is meshed with the workpiece gear. The lapping method includes meshing the lap with the workpiece gear such that: there is a clearance in a prescribed amount between a tooth tip of the lap and a bottom land of the workpiece gear, and there is a clearance in the prescribed amount between a bottom land of the lap and a tooth tip of the workpiece gear; and an effective tooth tip of the lap is located closer to the bottom land of the workpiece gear than a curved line indicating a tooth profile management diameter of the workpiece gear is.

With the lapping machine and the lapping method according to the invention, it is possible to lap a workpiece gear with high accuracy without causing formation of a recess at a dedendum of the workpiece gear.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view illustrating the configuration of a lapping machine;
FIG. 2 is a schematic view illustrating the configuration of a meshing section; and
FIG. 3 is a flowchart illustrating the steps of a lapping process.

### DETAILED DESCRIPTION OF EMBODIMENTS

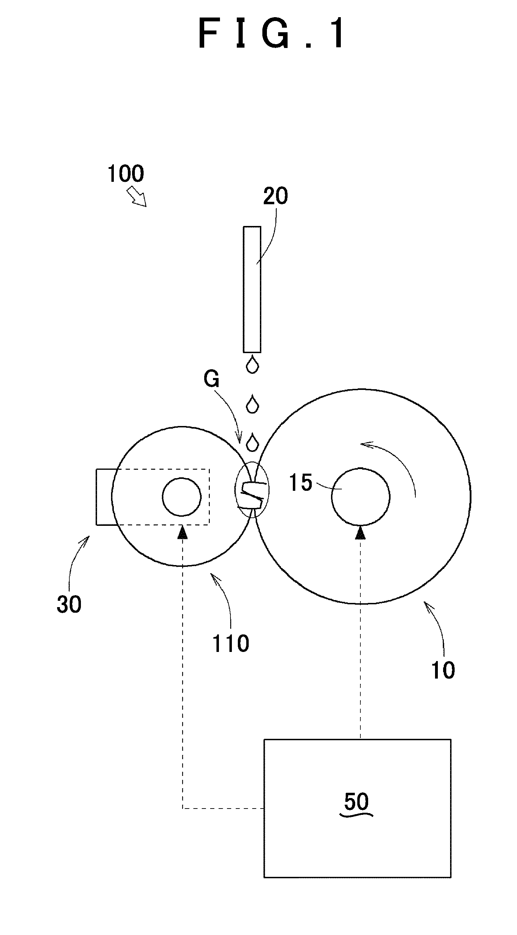

Hereinafter, the configuration of a lapping machine 100 will be described with reference to FIG. 1. FIG. 1 schematically illustrates the lapping machine 100. In FIG. 1, electric signal lines are indicated by broken lines.

The lapping machine 100 is a lapping machine according to an embodiment of the invention. The lapping machine 100 laps both flanks of each of the teeth of a workpiece gear 110. In the present embodiment, an involute spur gear is used as the workpiece gear 110.

Lapping is a process in which a lap and a workpiece are rubbed against each other with an abrasive held therebetween so that the workpiece undergoes micro cutting to be ground. In this way, lapping gives a smoother finish to the workpiece. Lapping according to the present embodiment is a process in which a lap 10 and the workpiece gear 110 are meshed with each other with a lapping compound (abrasive) held therebetween, and then the workpiece gear 110 undergoes micro cutting to be ground. In this way, lapping according to the present embodiment gives a smoother finish to the workpiece gear 110.

The lapping machine 100 includes the lap 10, a lapping liquid feeder 20, a center distance adjuster 30, and a controller 50. The lap 10 is disposed adjacent to the workpiece gear 110.

The lap 10 is a tool that is meshed with the workpiece gear 110 to grind both flanks of each of the teeth of the workpiece gear 110. The lap 10 is a gear-shaped tool. The lap 10 is rotatably supported on a rotary shaft 15. The design specifications of the lap 10 are set such that the configuration of a meshing section G (described later in detail) is realized when the lap 10 is meshed with the workpiece gear 110.

The design specifications of the lap 10 include the shape of the lap 10 and the distance between the center of the lap 10 and the center of the workpiece gear 110.

The rotary shaft 15 is selectively switched between a rotating state where the rotary shaft 15 is connected to a motor (not illustrated) and rotatively driven by the motor, and a braking state where a brake is applied to the rotary shaft 15 by a braking device (not illustrated). The rotary shaft 15 in the present embodiment is driven in a prescribed rotational direction (indicated by an arrow in FIG. 1). The motor and the braking device are connected to the controller 50.

The lapping liquid feeder 20 drips, from above, a lapping compound that contains abrasive grains onto the meshing section G where the workpiece gear 110 and the lap 10 are meshed with each other. The lapping compound drips under its own weight.

The center distance adjuster 30 adjusts the position of the workpiece gear 110 relative to the lap 10, thereby adjusting the distance between the center of the lap 10 and the center of the workpiece gear 110. The center distance adjuster 30 is connected to the controller 50.

The controller 50 selectively switches the rotary shaft 15 of the lap 10 between the rotating state where the rotary shaft 15 is rotatively driven by the motor connected to the rotary shaft 15, and the braking state where a brake is applied to the rotary shaft 15 by the braking device. That is, the controller 50 has a function of controlling driving and braking of the lap 10.

The controller 50 also has a function of adjusting the position of the workpiece gear 110 relative to the lap 10, thereby adjusting the distance between the center of the lap 10 and the center of the workpiece gear 110.

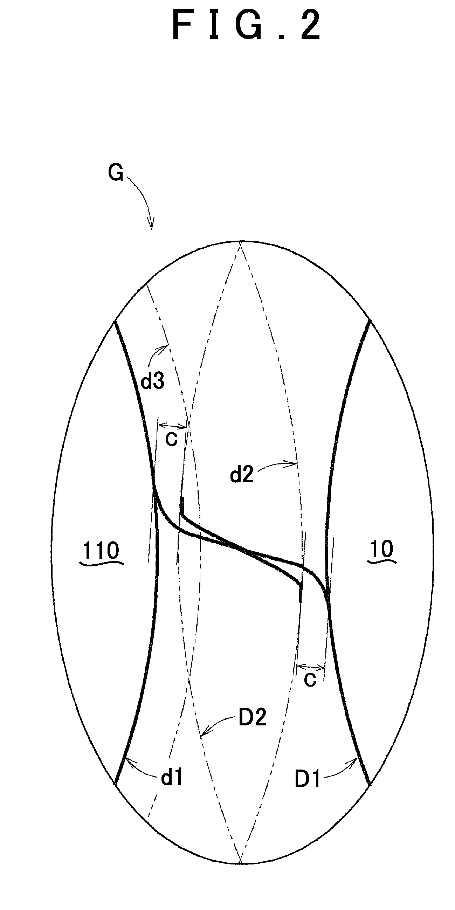

The configuration of the meshing section G will be described with reference to FIG. 2. FIG. 2 schematically illustrates the configuration of the meshing section G.

In the meshing section G, the lap 10 is meshed with the workpiece gear 110. In FIG. 2, the root circle of the lap 10 and the root circle of the workpiece gear 110 are indicated by solid lines. The diameter of the root circle of the lap 10 will be referred to as a root diameter D1, and the diameter of the root circle of the workpiece gear 110 will be referred to as a root diameter d1.

The lap 10 is meshed with the workpiece gear 110 under Conditions (1) and (2) described below. Condition (1): In the meshing section G, the lap 10 is meshed with the workpiece gear 110 in such a manner that a clearance C in a prescribed amount is left between the tooth tip of the lap 10 and the bottom land of the workpiece gear 110 and a clearance C in the prescribed amount is also left between the bottom land of the lap 10 and the tooth tip of the workpiece gear 110.

Condition (2): In the meshing section G, the lap 10 is meshed with the workpiece gear 110 in such a manner that the curved line indicating an effective tip diameter D2 of the lap 10 is located closer to the bottom land of the workpiece gear 110 than the curved line indicating a tooth profile management diameter d3 of the workpiece gear 110 is (i.e., the curved line indicating the effective tip diameter D2 is located between the bottom land of the workpiece gear 110 and the curved line indicating the tooth profile management diameter d3).

That is, the distance between the center of the lap 10 and the center of the workpiece gear 110 is set such that the effective tooth tip of the lap 10 is meshed with the workpiece gear 110, at a position closer to the bottom land of the workpiece gear 110 than the curved line indicating the tooth profile management diameter d3 of the workpiece gear 110 is (i.e., at a position between the bottom land of the workpiece gear 110 and the curved line indicating the tooth profile management diameter d3).

The effective tip diameter D2 means a tip diameter of the lap 10 excluding a portion to be chamfered. In FIG. 2, the effective tip diameter D2 of the lap 10 is indicated by a two-dot chain line. In FIG. 2, an effective tip diameter d2 of the workpiece gear 110 is indicated by a two-dot chain line.

The curved line indicating the tooth profile management diameter d3 indicates a position of a meshing starting point of the workpiece gear 110, which is set on the assumption that the workpiece gear 110 is meshed with another gear, for example, when the workpiece gear 110, as a lapped gear, is installed in a product. The meshing starting point means a position at which the other gear starts to mesh with the workpiece gear 110.

In other words, the curved line indicating the tooth profile management diameter d3 indicates a position on the bottom land side of the workpiece gear 110, at which another gear actually starts meshing with the workpiece gear 110, on the assumption that the workpiece gear 110 is meshed with the other gear when the workpiece gear 110 is installed, as a lapped gear, in a product. In FIG. 2, the tooth profile management diameter d3 of the workpiece gear 110 is indicated by a two-dot chain line.

In the meshing section G, the workpiece gear 110 and the lap 10 are meshed with each other with a backlash between the workpiece gear 110 and the lap 10. Note that a backlash means "play" between the tooth flank of the workpiece gear 110 and the tooth flank of the lap 10.

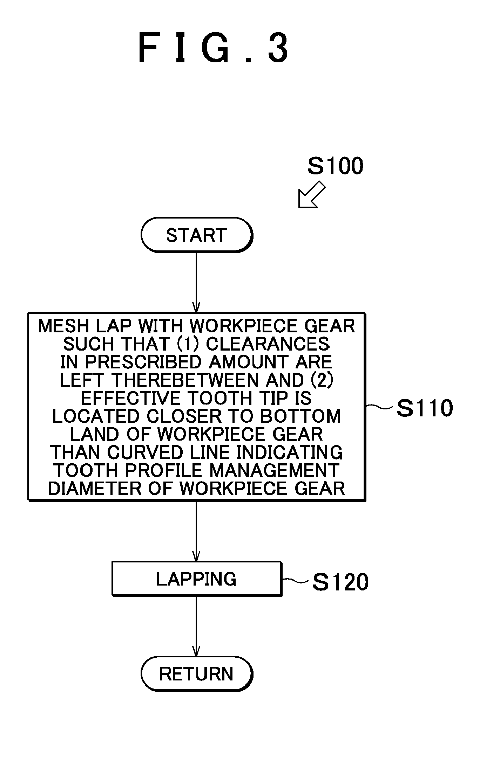

The steps of a lapping process S100 will be described with reference to FIG. 3. In FIG. 3, the steps of the lapping process S100 is indicated in the form of a flowchart.

The lapping process S100 indicates a lapping method according to the embodiment of the invention. The lapping process S100 is a process of lapping both flanks of each of the teeth of the workpiece gear 110 with the lapping machine 100.

In step S110, the workpiece gear 110 and the lap 10 of the lapping machine 100 are meshed with each other such that Conditions (1) and (2) are satisfied. Condition (1): The clearance C in a prescribed amount is left between the tooth tip of the lap 10 and the bottom land of the workpiece gear 110, and the clearance C in the prescribed amount is also left between the bottom land of the lap 10 and the tooth tip of the workpiece gear 110. Condition (2): the curved line indicating the effective tip diameter D2 of the lap 10 is located closer to the bottom land of the workpiece gear 110 than the curved line indicating the tooth profile management diameter d3 of the workpiece gear 110 is (i.e., the curved line indicating the effective tip diameter D2 is located between the bottom land of the workpiece gear 110 and the curved line indicating the tooth profile management diameter d3).

That is, in the lapping machine 100, the design specifications of the lap 10 are set and the distance between the center of the lap 10 and the center of the workpiece gear 110 is adjusted by the center distance adjuster 30 such that Condition (1) and Condition (2) are both satisfied. The center distance adjuster 30 that adjusts the distance between the center of the lap 10 and the center of the workpiece gear 110 is controlled by the controller 50, for example.

In step S120, the controller 50 drives the lap 10 to lap the workpiece gear 110.

The advantageous effects produced by the lapping machine 100 and the lapping process S100 will be described below. With the lapping machine 100 and the lapping process S100, it is possible to lap the workpiece gear 110 with high accuracy without causing formation of a recess at the dedendum of the workpiece gear 110.

In a conventional lapping process, a tooth tip of a lap is meshed with a portion (dedendum) of a tooth flank of a workpiece gear. Thus, the portion of the tooth flank, with which the lap is meshed, may be cut more deeply than the rest of the tooth flank and a recess may be formed at the portion. This leads to a lower dimensional accuracy of the workpiece gear obtained by lapping, resulting in lower meshing performance of the lapped workpiece gear. Due to such low meshing performance, the gear (lapped workpiece gear) is likely to generate vibrations and noise.

In contrast to this, with the lapping machine 100 and the lapping process S100, it is possible to prevent formation of a recess at the dedendum by employing the following techniques. That is, the clearance C in a prescribed amount is left between the tooth tip of the lap 10 and the bottom land of the workpiece gear 110, and the clearance C in the prescribed amount is also left between the bottom land of the lap 10 and the tooth tip of the workpiece gear 110. Further, the lap 10 is meshed with the workpiece gear 110 such that the curved line indicating the effective tip diameter D2 of the lap 10 is located closer to the bottom land of the workpiece gear 110 than the curved line indicating the tooth profile management diameter d3 of the workpiece gear 110 is (i.e., the curved line indicating the effective tip diameter D2 is located between the bottom land of the workpiece gear 110 and the curved line indicating the tooth profile management diameter d3).

While it is not specified in the lapping process S100 of the present embodiment, if there is a significant level difference due to pre-processing on the bottom land of the workpiece gear 110, it is preferable that the lap 10 be meshed with the workpiece gear 110, at a position that is offset from the position of the level difference.

A lapping machine (100) includes a lap (10) that is meshed with a workpiece gear (110) and laps the workpiece gear (110). The lap (10) is meshed with the workpiece gear (110) such that: there is a clearance in a prescribed amount between a tooth tip of the lap (10) and a bottom land of the workpiece gear (110), and there is a clearance in the prescribed amount between a bottom land of the lap (10) and a tooth tip of the workpiece gear (110); and an effective tooth tip (D2) of the lap (10) is located closer to the bottom land of the workpiece gear (110) than a curved line indicating a tooth profile management diameter (d3) of the workpiece gear (110) is.

## Claims

1. A lapping machine (100) **characterized by** comprising a lap (10) that is meshed with a workpiece gear (110) and laps the workpiece gear (110), wherein
the lap (10) is meshed with the workpiece gear (110) such that:
there is a clearance in a prescribed amount between a tooth tip of the lap (10) and a bottom land of the workpiece gear (110), and there is a clearance in the prescribed amount between a bottom land of the lap (10) and a tooth tip of the workpiece gear (110); and
an effective tooth tip (D2) of the lap (10) is located closer to the bottom land of the workpiece gear (110) than a curved line indicating a tooth profile management diameter (d3) of the workpiece gear (110) is.

2. A lapping method of lapping a workpiece gear (110) with a lap (10) that is meshed with the workpiece gear (110),
the lapping method **characterized by** comprising meshing the lap (10) with the workpiece gear (110) such that:
there is a clearance in a prescribed amount between a tooth tip of the lap (10) and a bottom land of the workpiece gear (110), and there is a clearance in the prescribed amount between a bottom land of the lap (10) and a tooth tip of the workpiece gear (110); and
an effective tooth tip (D2) of the lap (10) is located closer to the bottom land of the workpiece gear (110) than a curved line indicating a tooth profile management diameter (d3) of the workpiece gear (110) is.
